# EUROPÄISCHE PATENTSCHRIFT

(11) **EP 1 289 823 B1**
(45) Veröffentlichungstag und Bekanntmachung des Hinweises auf die Patenterteilung: **20.07.2005**
(21) Anmeldenummer: 01940004.3
(22) Anmeldetag: 30.05.2001
(51) Int. Cl.: B62D 25/16, B60R 13/02, B60R 13/04

(54) **VERFAHREN ZUR HERSTELLUNG EINES AUSSEN- ODER INNENAUSSTATTUNGSTEIL FÜR KRAFTFAHRZEUGE**
PROCESS FOR FABRICATING OF A EXTERIOR OR INTERIOR FITTING FOR AUTOMOBILES
PROCEDEE POUR FABRICATION DES ELEMENTS D'EQUIPEMENT EXTERIEUR OU INTERIEUR POUR VEHICULES A MOTEUR

(30) Priorität: 30.05.2000 AT 4022000
(43) Veröffentlichungstag der Anmeldung: 12.03.2003
(73) Patentinhaber: Intier Automotive Eybl GmbH, 2435 Ebergassing (AT)
(72) Erfinder: WALTER, Peter, A-2491 Neufeld (AT); LESZKOVITS, Roland, A-7100 Neusiedl/See (AT)
(74) Vertreter: Vinazzer, Edith, Dipl.-Ing.
(86) Internationale Anmeldenummer: PCT/AT2001/000172
(87) Internationale Veröffentlichungsnummer: WO 2001/092085

(56) Entgegenhaltungen:
- EP-A- 0 088 324
- EP-A- 0 752 364
- FR-A- 2 392 810
- GB-A- 1 506 287
- GB-A- 2 154 899

## Beschreibung

Die Erfindung betrifft ein Verfahren zur Herstellung eines Außen- oder Innenausstattungsteils für Kraftfahrzeuge aus einem geformten, zumindest einseitig und zumindest zum Teil mit einer textilen Schicht versehenen Basisteil aus Kunststoff. Die Erfindung betrifft ferner ein gemäß dem Verfahren hergestelltes Außen- oder Innenausstattungsteil.

Ein Verfahren mit den Merkmalen des Oberbegriffes des Anspruchs 1 ist z.B. aus der DE-A-1778403 bekannt. Es ist eine Anzahl von Außen- oder Innenausstattungsteilen für Kraftfahrzeuge bekannt, die grundsätzlich einen derartigen Aufbau aufweisen. Bei Innenausstattungsteilen, wie Innenverkleidungen für Türen etc., hat die textile Schicht eine gewisse Verschleißfestigkeit, Lichtbeständigkeit und eine geringe Neigung zur Verschmutzung aufzuweisen sowie auch ästhetisch ansprechend zu wirken. Die Herstellung der Teile erfolgt oft durch ein Hinterpressverfahren, bei dem beispielsweise in einer geöffneten Werkzeugform das textile Kunststoffmaterial, die Dekorschicht, positioniert wird und auf dieses eine fließfähige Kunststoffmasse aufgebracht wird. Danach wird die Form geschlossen, die Kunststoffmasse verteilt sich unter dem Schließdruck gleichmäßig in der Form und dringt in das Rückenmaterial des Dekormaterials teilweise ein. Beim Erstarren der Kunststoffmasse geht diese mit der Dekorschicht eine feste Verbindung ein.

Es ist auch möglich, das Kunststoffteil für ein Ausstattungsteil der eingangs genannten Art durch Spritzgießen zu herstellen. Das fertige Kunststoffteil kann mit der textilen Schicht bzw. der Dekorschicht durch Kaschieren verbunden werden.

Ausstattungsteile, die an der Fahrzeugaußenseite untergebracht werden, sind beispielsweise Radlaufschalen, die in den Radkästen untergebracht werden und einerseits einen Korrosionsschutz bzw. einen Schutz vor Steinschlägen bilden und andererseits eine Übertragung der Reifen-Fahrbahngeräusche, die während des Abrollens der Reifen am Untergrund entstehen, reduzieren sollen. Auch die Übertragung der von Spritzwasser bei nasser Fahrbahn und der durch Steinschläge verursachten Geräusche soll möglichst wirksam unterbunden werden. Für Radlaufschalen sind bereits unterschiedliche Ausführungsformen vorgeschlagen worden und es wird beispielsweise auf die DE-C2-33 43 402 verwiesen, in der Radlaufschalen offenbart sind, die als geformte Kunststoffschalen aus einem besonderen Kunststoff mit verhältnismäßig hohem Verlustfaktor bei gleichzeitig relativ niedrigem Elastizitätsmodul erzeugt werden sollen.

Eine etwas bessere luftschallabsorbierende Wirkung bei geringerem Gewicht ist durch die aus der DE-A1-198 17 567 bekannte Ausführung einer Radlaufschale erzielbar. Diese Radlaufschale besteht aus einer Art Rahmenteil aus einem akustisch wirksamen thermoplastischen Kunststoff, dessen mittige Öffnungen von einem textilen Kunststoffmaterial mit einer teppichflorartigen Oberfläche bedeckt sind. Die beiden Materialien sind randseitig derart fest miteinander verbunden, dass die Radlaufschale ein integrales Ganzes ist. Diese Radlaufschale ist durch ein Spritzgießverfahren herstellbar, wobei die entsprechenden Zuschnitte für das textile Material in einer Spritzgießform in ihrer Lage gesichert werden und nach dem Schließen der Form die textilen Flächen derart mit thermoplastischen Kunststoffmaterial umspritzt werden, dass die beiden Materialien nur randseitig fest miteinander verbunden werden. Es wird in dieser Druckschrift zwar behauptet, dass damit eine kostengünstige Herstellung der Radlaufschalen möglich wäre, aber das exakte Positionieren und Sichern des textilen Materials in der Form - erwähnt ist ein Sichern durch Nadeln und ein Niederhalten durch Stifte, um ein Verschieben während des Spitzgießens zu vermeiden - macht die Herstellung eher zeitaufwändig und auch kostenintensiv.

Die Erfindung hat sich nun die Aufgabe gestellt, ein Außen- oder Innenausstattungsteil der eingangs genannten Art mit guten schallabsorbierenden Eigenschaften, vergleichsweise geringem Gewicht und hoher Stabilität einfach herstellen zu können.

Gelöst wird die gestellte Aufgabe erfindungsgemäß dadurch, dass zumindest ein Teil des Basisteils durch Sintern eines Kunststoffpulvers hergestellt wird und daher aus offenporigem und gesintertem Kunststoff besteht.

Der gesinterte und zumindest zum Teil offenporige Kunststoff verleiht dem Basisteil eine hohe Stabilität bei vergleichsweise geringem Gewicht, welches durch die Offenporigkeit des Materials erzielt wird. Durch die Offenporigkeit kann ferner eine gute Luft- und Wasserdampfdurchlässigkeit des Basisteils erzielt werden, was für bestimmte Anwendungen von Vorteil sein kann. Die Kombination aus der textilen Schicht und dem offenporigen Kunststoffmaterial macht das gesamte Bauteil besonders gut schallabsorbierend.

Gemäß einer bevorzugten Ausführungsform der Erfindung weist der gesinterte und offenporige Kunststoff einen Porositätsgrad von 10 bis 80%, insbesondere von 40 bis 60%, auf. Der Porostitätsgrad wird durch den Sinterprozess bestimmt und kann gemäß den erwünschten Eigenschaften - Schalldämpfung, Stabilität, Gewicht - für das Ausstattungsteil entsprechend gewählt werden (Anspruch 2).

Soll eine gewisse Ausgewogenheit zwischen den erwünschten schalldämpfenden Eigenschaften und der Stabilität erzielt werden, sollte die Porengröße des gesinterten und offenporigen Kunststoffes zwischen 10 und 100 µm betragen (Anspruch 3).

Für die schalldämpfenden Eigenschaften kann es auch von Vorteil sein, wenn die Porosität über die Stärke des Basisteils variiert wird (Anspruch 4).

Auf die Stabilität des gesamten Außen- oder Innenausstattungsteils wirkt es sich günstig aus, wenn das Basisteil stellenweise, insbesondere randseitig, verdichtet ist (Anspruch 5).

Ein erfindungsgemäß hergestelltes Außen- oder Innenausstattungsteil kann nun sowohl einseitig, als auch beidseitig mit einer textilen Schicht versehen sein, wobei es die Herstellung vereinfacht, wenn die textile Schicht jeweils über die gesamte Fläche des Ausstattungsteils vorgesehen ist (Anspruch 6).

Als Ausgangsmaterial für das Basisteil und/oder die textile Schicht kommen insbesondere verschiedene Kunststoffmaterialien, wie Polyethylen, Polypropylen, Polyester, Polyamid oder PVC in Frage (Anspruch 9).

Bei einer besonders bevorzugten Ausführungsvariante der Erfindung ist das Außenausstattungsteil eine Radlaufschale (Anspruch 10). Gerade bei Radlaufschalen sind die erzielbare Stabilität bei vergleichsweise geringem Gewicht und die guten schallabsorbierenden Eigenschaften besonders vorteilhaft.

Erfindungsgemäß ausgeführte Innenausstattungsteile können insbesondere der Fahrzeughimmel, Tür- oder Säulenverkleidungen, Verkleidungsteile für den Lade-und Gepäckraum und/oder zumindest ein Teil des Bodenteppichs des Kraftfahrzeuges sein (Anspruch 11).

Erfindungsgemäß ausgeführte Außen- oder Innenausstattungsteile lassen sich auf eine sehr einfache Weise mit geringem Aufwand fertigen.

Eine derartige Möglichkeit zur Herstellung eines erfindungsgemäß ausgeführten Außen- oder Innenausstattungsteils besteht darin, dass eine platten- oder bahnenförmige Schicht aus gesintertem und zumindest zum Teil offenporigem Kunststoff durch Kaschieren oder dergleichen mit der textilen Schicht verbunden wird und anschließend thermoverformt wird (Anspruch 7).

Weitere Merkmale, Vorteile und Einzelheiten der Erfindung werden nun anhand der Zeichnung, die als Ausführungsbeispiel der Erfindung eine Radlaufschale darstellt, näher beschrieben. Dabei zeigen
Fig. 1 schematisch eine Schrägansicht einer Ausführungsvariante einer Radlaufschale und
Fig. 2 einen mittigen Querschnitt durch die hier mit einem angedeuteten Radkasten dargestellte Radlaufschale aus Fig. 1.

Die Erfindung befasst sich mit flächig ausgeführten und vielfältig geformten Bauteilen, die außen am oder im Inneren von Kraftfahrzeugen einsetzbar sind und wird anhand des dargestellten Ausführungsbeispiels, einer Radlaufschale, näher beschrieben.

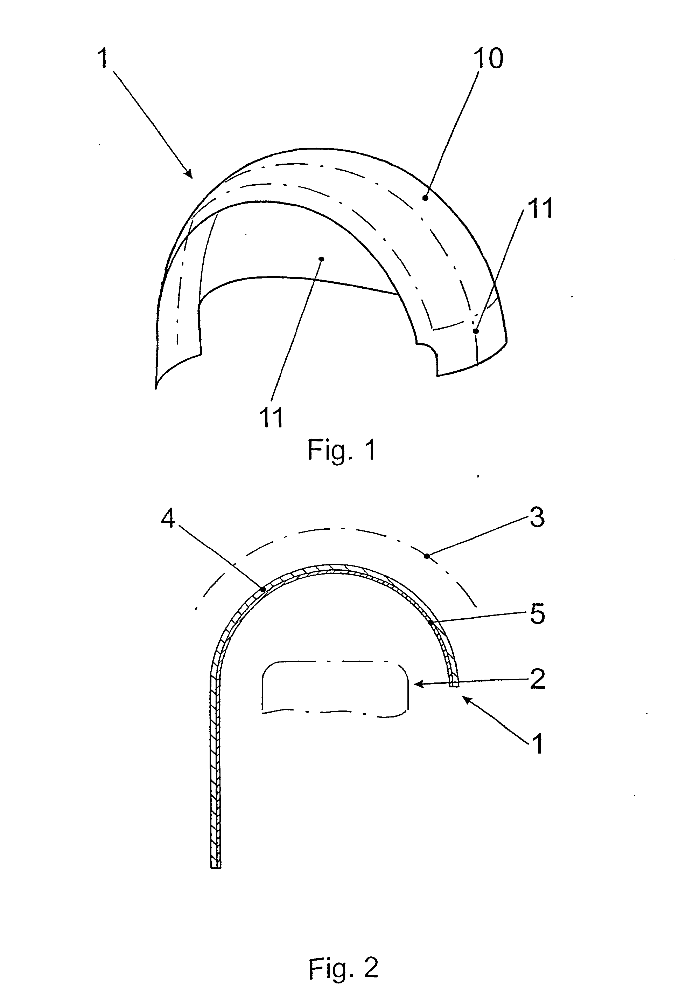

Radlaufschalen werden in den Radkästen von Kraftfahrzeugen befestigt, um dort Schutz vor Steinschlägen und Korrosion zu bilden und um eine Übertragung des Reifens/Fahrbahngeräusches, und des durch Spritzwasser und Steinschlag verursachten Geräusches zu reduzieren. Fig. 1 und Fig. 2 zeigen eine Radlaufschale 1, die auf übliche Weise innerhalb eines Radkastens 3 angeordnet ist und einen das in Fig. 2 angedeutete Rad 2 überdeckenden Bereich 10 und weitere, insbesondere zu ihrer Befestigung vorgesehene und mit dem Bereich 10 vorzugsweise einstückig ausgebildeten Bereiche 11 aufweist. Das gesamte Bauteil 1 ist daher an die durch die Karosserie des jeweiligen Kraftfahrzeuges vorgegebene Form angepasst und kann auch mit Rippen und/oder Sicken versteift sein und ist mit entsprechenden Befestigungspunkten versehen.

Eine erfindungsgemäß ausgeführte Radlaufschale 1 besteht aus einem Basisteil 4 aus einem gesinterten Kunststoff. Gesinterte Platten bzw. Bahnen aus einem hochmolekularen Kunststoff, beispielsweise aus Polyethylen, Polypropylen , Polyamid, Polyester, PVC oder aus sonstigen geeigneten, insbesondere für Kraftfahrzeugteile einsetzbaren Kunststoffen, sind die Ausgangsprodukte zur Herstellung erfindungsgemäßer Bauteile. Ein erfindungsgemäßes Bauteil weist somit ein offenporiges Kunststoffteil auf. Die Korngröße des Ausgangsmaterials - des Kunststoffpulvers - sowie das Sinterverfahren an sich bestimmen den Porositätsgrad des entstehenden Kunststoffteils sowie die Porengröße im Kunststoffmaterial. Zur Herstellung von Basisteilen 4 für Radlaufschalen 1 sowie für andere Anwendungen bei Kraftfahrzeugen eignet sich insbesondere gesintertes Kunststoffmaterial mit einem Porositätsgrad von 10 bis 80%, vorzugsweise 40 bis 60%, und einer Porengröße im Bereich zwischen 10 und 100 µm.

Das aus gesintertem Kunststoff bestehende Basisteil 4 ist insbesondere mit einer Stärke in der Größenordnung von 1,5 bis 3mm ausgeführt und zumindest in jenem

Bereich, welcher das Rad 2 des Kraftfahrzeuges zumindest bzw. weitgehend dort überdeckt, wo bei Fahrt auf nasser Fahrbahn die Radlaufschale der größten Spritzwasserbelastung ausgesetzt ist, mit einer textilen Schicht 5 aus einem Kunststoff und/oder aus Naturfasern versehen. Die Schicht 5 kann beispielsweise ein Vlies, ein Nadelfilz, ein Gewebe, ein Gewirk oder ein getuftetes Material und somit ein Teppich sein. Als Ausgangsmaterial für die Schicht 5 kommen als Kunststoffe ebenfalls Polyethylen, Polopropylen, PVC sowie Polyamid oder Polyester in Frage. Von den Naturfasern können Baumwolle, Wolle, Jute und andere verwendet werden. Wird Kunststoff als Ausgangsmaterial für die Schicht 5 verwendet, so kann dieser mit dem Kunststoffmaterial des gesinterten Basisteil 4 übereinstimmen, was für die Recyclebarkeit von Vorteil ist.

Je nach Porositätsgrad, insbesondere bei hoher Materialporosität, sind erfindungsgemäß ausgeführte Radlaufschalen 1 nur unwesentlich schwerer als die aus dem Stand der Technik bekannten Ausführungen mit eingefassten Textilvliesen. Erfindungsgemäße Radlaufschalen weisen jedoch gegenüber den bekannten eine Reihe von Vorteilen auf. In Folge der Offenporigkeit des Basismaterials ist nun nicht nur die textile Schicht 5 sondern auch das Basisteil 4 luft- und wasserdampfdurchlässig. Von besonderem Vorteil bei der Erfindung ist die hohe Stabilität im Vergleich zu den erwähnten bekannten Ausführungen. Von den akustischen Eigenschaften her hat sich herausgestellt, dass erfindungsgemäß ausgeführte Radlaufschalen 1 einerseits durch die textile Schicht 5 und andererseits durch offenporige Struktur des Basisteils 4 über sehr gute schalldämpfende Eigenschaften verfügen.

Bei einer nicht dargestellten Ausführungsform einer erfindungsgemäßen Radlauf schale kann ferner vorgesehen werden, dass die dem Rad abgewandte Seite der Radlaufschale mit einer textilen Schicht versehen wird oder dass beiden Seiten mit solchen Schichten versehen werden. Dabei kann die textile Schicht zumindest dort vorgesehen werden, wo die schallabsorbierenden Eigenschaften besonders von Bedeutung sind. Aus herstellungstechnischen Gründen kann es dabei von Vorteil sein, wenn das gesamte Bauteil, die gesamte Radlaufschale 1, innen- und/oder außenseitig mit einer textilen Schicht versehen wird. Auf Möglichkeiten der Herstellung wird weiter unten noch eingegangen.

Es gibt eine Vielzahl von Einsatzmöglichkeiten von erfindungsgemäß aus einem zumindest einseitig textil-beschichteten und aus gesintertem Kunststoff bestehenden Teilen bei Kraftfahrzeugen. So können insbesondere Verkleidungsteile im Fahrzeuginneren, beispielsweise Türverkleidungen, Holmverkleidungen oder dergleichen, aus einem aus gesinterten Kunststoff bestehenden Basisteil, welcher außenseitig, also auf der sichtbaren Seite, mit einer textilen Schicht, einem Vlies oder einem Teppich, versehen ist, bestehen. Auch der Fahrzeughimmel sowie zumindest Bereiche des Bodenteppichs eines Kraftfahrzeuges können derart hergestellt sein. Dabei ist auch eine Kombination mit anderen Materialien denkbar, beispielsweise können Bodenteppichteile auf der Rückseite, der nicht sichtbaren Seite, zusätzlich hinterschäumt sein.

Die Herstellung erfindungsgemäß ausgeführter Bauteile ist auf sehr einfache Weise möglich. So kann beispielsweise eine fertige gesinterte Kunststoffplatte durch Kaschieren (Verkleben) mit einer textilen Schicht verbunden werden. Es sind jedoch auch andere Herstellverfahren möglich.

Das derart hergestellte Teil hat vorerst Plattenform. Die entsprechend geformten Bauteile, beispielsweise die Radlaufschale oder ein Innenverkleidungsteil, entstehen durch Thermoverformen. Dabei kann partiell, beispielsweise am Rand dieser Bauteile, über einen schmaleren Werkzeugspalt höherer Druck aufgebracht und ein Verdichten des gesinterten Kunststoffmaterials erfolgen, wodurch die Porosität in diesem Bereich zwar verringert wird, die Steifigkeit des Bauteils auf diese Weise jedoch gezielt erhöht werden kann.

Es ist ferner auch möglich, beim Sinterprozess Einfluss auf die Dichte bzw. den Porositätsgrad des Bauteils zu nehmen, wobei beispielsweise die Dichte über die Stärke des entstehenden Bauteils variieren kann. Es ist auch möglich, das Basisteil derart zu sintern, dass an einer seiner Seiten eine geschlossene, undurchlässige

Kunststoffschicht entsteht, an die eine Schicht von offenporig gesintertem Kunststoff anschließt. Bei einer Radlaufschale würde die geschlossene Seite insbesondere die Rückseite (dem Radkasten zugewandt) bilden. Die Ausgangsmaterialien für das Basisteil können diverse Zusatzstoffe - Füllstoffe, Modifikatoren, beispielsweise Netzmitel, etc. - enthalten, um am fertigen Produkt bestimmte Eigenschaften zu erzielen.

## Patentansprüche

1. Verfahren zur Herstellung eines Außen- oder Innenausstattungsteils für Kraftfahrzeuge aus einem geformten, zumindest einseitig und zumindest zum Teil mit einer textilen Schicht versehenen Basisteil aus Kunststoff,
**dadurch gekennzeichnet,**
**dass** zumindest ein Teil des Basisteils (4) durch Sintern eines Kunststoffpulvers hergestellt wird und daher aus offenporigem und gesintertem Kunststoff besteht.

2. Verfahren nach Anspruch 1, **dadurch gekennzeichnet, dass** der gesinterte und offenporige Kunststoff einen Porositätsgrad von 10 bis 80%, insbesondere von 40 bis 60%, aufweist.

3. Verfahren nach Anspruch 1 oder 2, **dadurch gekennzeichnet, dass** die Porengröße des gesinterten und offenporigen Kunststoffes zwischen 3 und 100 µm beträgt.

4. Verfahren nach einem der Ansprüche 1 bis 3, **dadurch gekennzeichnet, dass** die Porosität über die Stärke des Basisteils (4) variiert.

5. Verfahren nach einem der Ansprüche 1 bis 4, **dadurch gekennzeichnet, dass** das Basisteil (4) stellenweise, insbesondere randseitig, verdichtet wird.

6. Verfahren nach einem der Ansprüche 1 bis 5, **dadurch gekennzeichnet, dass** das Basisteil (4) zumindest einseitig und insbesondere über seine gesamte Fläche mit der textilen Schicht (5) versehen wird.

7. Verfahren nach einem der Ansprüche 1 bis 6, **dadurch gekennzeichnet, dass** eine platten- oder bahnenförmige Schicht aus gesintertem und zumindest zum Teil offenporigem Kunststoff durch Kaschieren oder dergleichen mit der textilen Schicht verbunden und anschließend thermoverformt wird.

8. Verfahren nach einem der Ansprüche 1 bis 7, **dadurch gekennzeichnet, dass** das Basisteil (4) einseitig mit einer geschlossen gesinterten Schicht versehen wird.

9. Verfahren nach einem der Ansprüche 1 bis 8, **dadurch gekennzeichnet, dass** das Ausgangsmaterial für das Basisteil und/oder die textile Schicht (5) Polyethylen, Polypropylen, Polyester, Polyamid oder PVC ist.

10. Außenausstattungsteil hergestellt nach dem Verfahren gemäß zumindest einem der Ansprüche 1 bis 9, **dadurch gekennzeichnet, dass** es eine Radlaufschale (1) ist.

11. Innenausstattungsteil hergestellt nach dem Verfahren gemäß zumindest einem der Ansprüche 1 bis 9, **dadurch gekennzeichnet, dass** es ein Innenverkleidungsteil, ein Fahrzeughimmel, eine Tür- oder Säulenverkleidung, ein Verkleidungsteil für einen Lade- oder Gepäckraum und/oder ein Bodenteppichteil ist.

## Claims

1. A method for manufacturing an exterior or interior fitting for automobiles comprising a moulded plastic base part provided with a textile layer at least on one side and at least partially,
**characterised in**
**that** at least one part of the base part (4) is manufactured by sintering a plastic powder and thus consists of open-pored and sintered plastic.

2. The method according to claim 1, **characterised in that** the sintered and open-pored plastic has a degree of porosity of 10 to 80 %, especially of 40 to 60 %.

3. The method according to claim 1 or 2, **characterised in that** the pore size of the sintered and open-pored plastic is between 3 and 100 µm.

4. The method according to any one of claims 1 to 3, **characterised in that** the porosity varies over the thickness of the base part (4).

5. The method according to any one of claims 1 to 4, **characterised in that** the base part (4) is compacted, in parts, especially at the side.

6. The method according to any one of claims 1 to 5, **characterised in that** the base part (4) is provided with the textile layer (5) at least on one side and especially over its entire surface.

7. The method according to any one of claims 1 to 6, **characterised in that** a plate- or web-shaped layer of sintered and at least partly open-pored plastic is joined to the textile layer by laminating or the like and then thermoformed.

8. The method according to any one of claims 1 to 7, **characterised in that** the base part (4) is provided with a closed sintered layer on one side.

9. The method according to any one of claims 1 to 8, **characterised in that** the starting material for the base part and/or the textile layer (5) is polyethylene, polypropylene, polyester, polyamide or PVC.

10. An exterior fitting manufactured according to the method according to at least one of claims 1 to 9, **characterised in that** it is a vehicle wheel arch shell (1).

11. An interior fitting manufactured according to the method according to at least one of claims 1 to 9, **characterised in that** it is an interior cladding part, a roof, a door or column cladding, a cladding part for a boot or luggage compartment and/or a floor carpet part.

## Revendications

1. Procédé de fabrication d'une pièce d'équipement extérieur ou intérieur pour véhicules automobiles à partir d'une pièce de base en matière plastique moulée et revêtue du moins d'un côté et du moins en partie d'une couche textile,
**caractérisé en ce que**
au moins une partie de la pièce de base (4) est fabriquée par frittage d'une poudre de matière plastique et est donc composée de matière plastique frittée à pores ouverts.

2. Procédé selon la revendication 1, **caractérisé en ce que** la matière plastique frittée à pores ouverts présente un degré de porosité de 10 à 80 %, notamment de 40 à 60 %.

3. Procédé selon la revendication 1 ou 2, **caractérisé en ce que** la taille des pores de la matière plastique frittée à pores ouverts va de 3 à 100 µm.

4. Procédé selon une des revendications 1 à 3,
**caractérisé en ce que** la porosité varie sur l'épaisseur de la pièce de base (4).

5. Procédé selon une des revendications 1 à 4,
**caractérisé en ce que** la pièce de base (4) est densifiée par endroits, notamment du côté du bord.

6. Procédé selon une des revendications 1 à 5,
**caractérisé en ce que** la pièce de base (4) est revêtue du moins unilatéralement et notamment sur toute sa surface par la couche textile (5).

7. Procédé selon une des revendications 1 à 6,
**caractérisé en ce qu'**une couche en forme de plaque ou de bande en matière plastique frittée et au moins partiellement à pores ouverts est assemblée par contrecollage ou similaire à la couche textile puis thermoformée.

8. Procédé selon une des revendications 1 à 7,
**caractérisé en ce que** la pièce de base (4) est revêtue unilatéralement d'une couche frittée fermée.

9. Procédé selon une des revendications 1 à 8,
**caractérisé en ce que** le matériau initial pour la pièce de base et/ou la couche textile (5) est du polyéthylène, du polypropylène, du polyester, du polyamide ou du PVC.

10. Pièce d'équipement extérieur fabriqué selon le procédé suivant au moins une des revendications 1 à 9, **caractérisée en ce qu'**il s'agit d'une coque de train de roue (1).

11. Pièce d'aménagement intérieur fabriquée selon au moins une des revendications 1 à 9, **caractérisée en ce qu'**il s'agit d'une pièce d'habillage intérieur, d'un ciel de véhicule, d'un habillage de portière ou de colonne, d'une pièce d'habillage pour casier de chargement ou à bagages et/ou d'une pièce de tapis de sol.
